# EUROPEAN PATENT APPLICATION

(11) **EP 2 424 184 A1**
(43) Date of publication of application: **29.02.2012**
(21) Application number: 09843566.2
(22) Date of filing: 23.09.2009
(51) Int. Cl.: H04L 29/06

(54) **METHOD FOR ESTABLISHING SAFE ASSOCIATION AMONG WAPI STATIONS IN AD-HOC NETWORK**

(30) Priority: 21.04.2009 CN 200910135528
(71) Applicant: ZTE Corporation, Shenzhen, Guangdong 518057 (CN)
(72) Inventor: LIU, Jiabing, Shenzhen Guangdong 518057 (CN); SHI, Yuanqing, Shenzhen Guangdong 518057 (CN); KANG, Wangxing, Shenzhen Guangdong 518057 (CN)
(74) Representative: Anderson, Angela Mary
(86) International application number: PCT/CN2009/074155
(87) International publication number: WO 2010/121462

(57) **Abstract**

The present invention discloses a method for establishing a security association among WAPI stations in an ad-hoc network, and the method comprises: when a security association between two stations in the ad-hoc network is to be established, one station STA2 serving as an authenticator entity, another station STA1 serving as an authentication supplicant entity, the station STA2 which serves as the authenticator entity initiating an authentication negotiation to the station STA1 which serves as the authentication supplicant entity, and after completing a unicast key negotiation, the station STA1 and the station STA2 carrying out a multicast key negotiation, and the establishment of the security association being finished after multicast session keys of the station STA1 and the station STA2 are notified successfully in said multicast key negotiation process. The method reduces the twice authentication agreement process between two STA to once, and reduces the total times of authentication negotiation to half of that in the prior art. And at the same time, the multicast key notification process is optimized, which reduces the multicast key notification time.

## Description

### Technical Field

The present invention relates to the wireless local area network communication field, and particularly, to a method for establishing a security association among WLAN Authentication and Privacy Infrastructure (WAPI) stations in an ad-hoc network.

### Background of the Related Art

At present, the wireless network security mainly adopts the security mechanism of the wireless local area network standard (IEEE802.11) constituted by the Institute of Electrical and Electronics Engineers (IEEE), and the security mechanism adopts the Wired Equivalent Privacy (WEP). This mechanism has been widely proved that it does not have the security equivalent to the wired, which brings a huge hidden danger to the wireless local area network. In this situation, China has put forward a wireless local network national standard GB15629.11 in May, 2003, which introduces a brand new security mechanism WAPI to implement the security of the wireless local network, and has published an improved national standard version (GB15629.11-2003/XG1-2006) in 2006. The GB15629.11-2003/XG1-2006 is comprised of the WLAN Authentication Infrastructure (WAI) and WLAN Privacy Infrastructure (WPI). Wherein the WAI adopts an ellipse curve based public key certificate system, and a wireless station (STA) and an access point (AP) carry out bidirectional identity authentication through an authentication server (AS), and for the security of data transmission, WPI adopts the symmetric cryptographic algorithm SMS4 provided by the State Commercial Secret code Regulatory Commission Office in China for encryption and decryption to ensure the security of the data transmission.

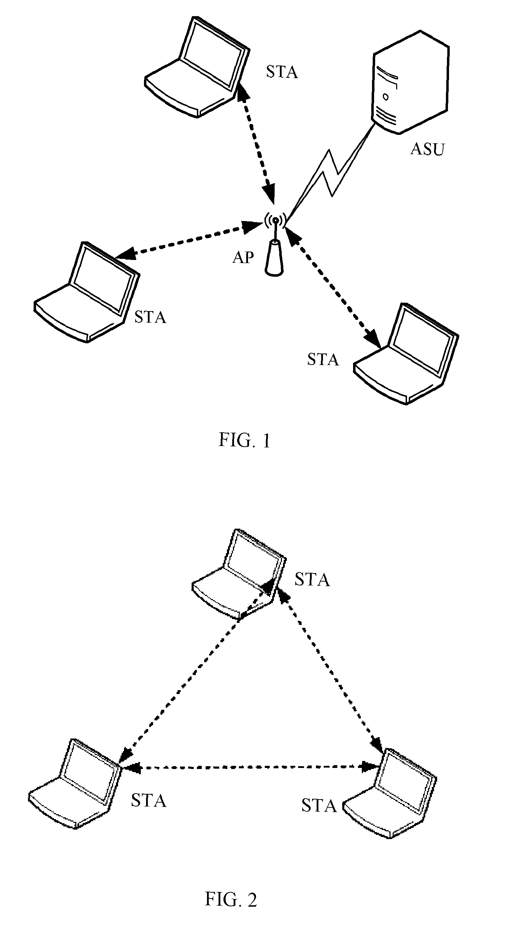

In the WAPI mechanism, there are three entities generally, namely station (STA), wireless access point (AP) and authentication server unit (ASU), which are called a basic service set (BSS), as shown in FIG.1. In the BSS, an AP is responsible for communication among all of the STAs in the service set, and if a STA wishes to communicate with another STA, it should establish a security association with the AP at first, and then securely transmits data. The establishment of the security association is divided into two parts: one is the identity certificate authenticating to generate a basic key, and the other is the key negotiation based on the basic key, and the key negotiation includes the unicast key negotiation and the multicast key notification.

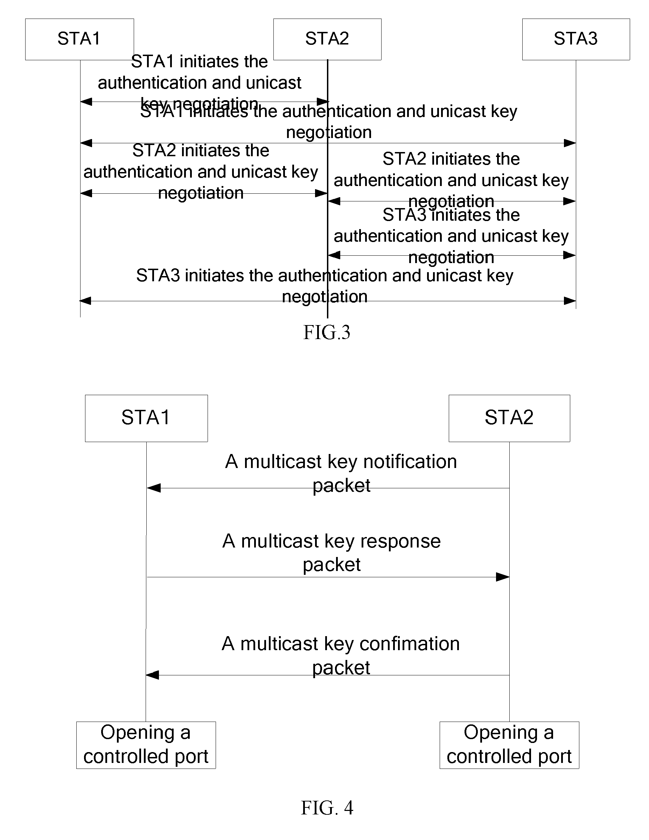

However, there is a kind of a particular BSS existing in the wireless network, which is called independent BSS (IBSS), and also called ad-hoc network, as shown in FIG. 2. The AP does not exist in the IBSS, and all STAs have equal status and can communicate with each other directly. In this case, the STA is not only an authentication supplicant entity (ASUE), but also an authenticator entity (AE). An ASU can also exist, which is different from the BSS, and therefore the establishment of its security association is also different from the BSS. According to the GB15629.11-2003/XG1-2006, the establishment of the WAPI based security association in the ad-hoc mode is divided into two situations: based on the pre-shared key and based on the certificate. When two STAs choose the authentication method based on the certificate, they will initiate the certificate authentication process respectively, establish two independent base keys (BK), and then carry out twice five steps handshakes (wherein the former three steps handshakes complete the unicast key negotiation process, and the latter two steps handshakes complete the multicast key notification process) with a result of two independent unicast keys being acquired by negotiation, and finally the two STAs notify their respective multicast keys. In the practical communication process, the unicast data between STAs is encrypted and decrypted by the unicast encryption key (UEK) and unicast integrity check key (UCK) derived by negotiation in the process of unicast key negotiation which is initiated by the STA with larger MAC address, which serves as the AE. The broadcast/multicast data sent by each STA is encrypted using the multicast encryption key (MEK) and multicast integrity check key (MCK) derived from the multicast master key notified by the STA itself, and when received, the broadcast/multicast data is decrypted using the multicast encryption key (MEK) and multicast integrity check key (MCK) which are derived from the multicast master key notified by the sender STA, as shown in FIG. 3. The establishing of security association based on the pre-shared key is similar to that based on the certificate except that the pre-shared key can be directly used as the base key BK.

It can be seen from above content and FIG. 3 that every two STAs have to carry out twice authentication negotiations to communicate in present standard. For example, twice authentication negotiation processes are required for two STAs, six times authentication negotiation processes are required for three STAs, and N*(N-1) times authentication negotiation processes are required for N STAs. Therefore, when there are a plurality of STAs in an ad-hoc network, the time spent for establishing the ad-hoc network is very long.

### Summary of the Invention

The technical problem to be solved in the present invention is to provide a method for establishing the security associations among WAPI stations in an ad-hoc network, which simplifies the authentication negotiation process and reduces the multicast key notification time.

In order to solve the above problem, the present invention provides a method for establishing a security association among WAPI stations in an ad-hoc network, and the method comprises:
when a security association between two stations in the ad-hoc network is to be established, one station STA1 serving as an authentication supplicant entity, another station STA2 serving as an authenticator entity, the station STA2 which serves as the authenticator entity initiating an authentication negotiation to the station STA1 which serves as the authentication supplicant entity, and after completing a unicast key negotiation, the station STA1 and the station STA2 carrying out a multicast key negotiation, and establishment of the security association being finished after multicast session keys of the station STA1 and the station STA2 are notified successfully in said multicast key negotiation process.

Furthermore, a station which joins into the ad-hoc network in advance serves as authentication supplicant entity, and a station which joins into the ad-hoc network later serves as an authenticator entity.

Furthermore, the multicast key negotiation process comprises steps of:
said station STA2 sending a multicast key notification packet to said station STA1 to start the multicast key negotiation process;
said station STA1 verifying said multicast key notification packet, and after the verification succeeds, said station STA1 returning a multicast key response packet to said station STA2;
said station STA2 verifying said multicast key response packet to implement a multicast key notification of said station STA2, and judging whether said multicast key notification of said station STA2 succeeds or not, and after said multicast key notification of said station STA2 is judged to be successful, said station STA2 returning a multicast key confirmation packet to said station STA1; and
said station STA1 verifying said multicast key confirmation packet to implement a multicast key notification of said station STA1, and judging whether said multicast key notification of said station STA1 succeeds or not, and after said multicast key notification of said station STA1 is judged to be successful, the multicast key negotiation process of said station STA1 and said station STA2 being finished.

Furthermore, said multicast key notification packet includes a flag, a multicast session key index, a unicast session key index, an address index, a data sequence number, a key notification flag, key data and a message authentication code;
said step of said station STA1 verifying said multicast key notification packet comprises: said station STA1 detecting whether said message authentication code is right or not and whether said key notification flag is monotone increasing or not, and if said message authentication code is right and said key notification flag is monotone increasing, the verification being successful, if said message authentication code is not right, or said message authentication code is right while key notification flag is not monotone increasing, the verification being failed, and said station STA 1 discarding said multicast key notification packet.

Furthermore, said station STA1 calculats a multicast session key of said station STA2 according to a notification main key in said key data, installs the multicast session key of said station STA2 adopting a primitive, and invokes the primitive to start a receiving function of the multicast session key of said station STA2.

Furthermore, said multicast key response packet includes a flag, a multicast session key index, a unicast session key index, an address index, a data sequence number, a key notification flag, key data and a message authentication code; and said address index is the same with an address index in the multicast key notification packet; and

said multicast session key index not only includes a multicast session key index of said station STA1, but also includes a multicast session key index of said station STA2, and said unicast session key index not only includes a unicast session key index of said station STA1, but also includes a unicast session key index of said station STA2, and said key notification flag not only include a key notification flag of the station STA2, but also includes a key notification flag of the station STA1.

Furthermore, the station STA2 verifying said multicast key response packet means:
said station STA2 detecting whether said message authentication code is right or not, comparing the multicast session key index, unicast session key index, address index and key notification flag of the station STA2 in said multicast key response packet are the same with corresponding field values in said multicast key notification packet, and if said message authentication code is right, and all of said corresponding field values are the same, the multicast key notification of said station STA2 being successful;
if said message authentication code is wrong, or parts or all of said corresponding field values are different, the multicast key notification of said station STA2 being failed, and the STA2 discarding said multicast key response packet.

Furthermore, said station STA2 starts a sending function of the multicast session key of said station STA2 using a primitive, and
said station STA2 calculates a multicast session key of said station STA1 according to a notification main key in said key data in said multicast key response packet, installs the multicast session key of said station STA1 adopting a primitive, and invokes the primitive to start a receiving function of the multicast session key of said station STA1.

Furthermore, said multicast key confirmation packet includes a flag, a multicast session key index, a unicast session key index, an address index, a key notification flag and a message authentication code; and said address index field is the same with address indices in the multicast key notification packet and the multicast key response packet; and
said multicast session key index is a multicast session key index of said station STA1, said unicast session key index is a unicast session key index of said station STA1, and said key notification flag is a key notification flag of the station STA1.

Furthermore, the station STA1 verifying said multicast key confirmation packet means:
said station STA1 detecting whether said message authentication code is right or not, comparing the multicast session key index, unicast session key index and key notification flag in said multicast key confirmation packet are the same with corresponding multicast session key index, unicast session key index and key notification flag of said stations STA1 in said multicast key response packet, and comparing the address index in said multicast key confirmation packet is the same with the address index in said multicast key response packet, and if said message authentication code is right and a result of the comparison is all are the same, the multicast key notification of said station STA1 being successful; if said message authentication code is wrong, or the result of comparison is parts or all are different, the multicast key notification of said station STA1 being failed, and said STA1 discarding said multicast key confirmation packet.

Furthermore, said station STA1 starts a sending function of the multicast session key of said station STA1 using a primitive.

Furthermore, before said step of said station STA2 initiating the authentication negotiation to said station STA1, said station STA2 judges whether said ad-hoc network is in a pre-shared key mode or a certificate mode, and if in the certificate mode, said station STA2 sends an authentication activation packet to said station STA1 to initiate a certificate authentication process, and after the certificate authentication process initiated by said authentication activation packet ends successfully, said station STA2 and station STA1 carry out said unicast key negotiation; if in the pre-shared key mode, said station STA2 sends a unicast key request packet to said station STA1, and said station STA2 and station STA1 directly carry out said unicast key negotiation.

As a conclusion, the present invention provides a method for establishing the security association among WAPI stations in the ad-hoc network, which reduces the twice authentication negotiation process between two STA to once, and reduces the whole times of authentication negotiation to half of the prior art. And at the same time, the multicast key notification process is optimized, which reduces the multicast key notification time.

### Brief Description of Drawings

FIG. 1 is a sketch map of the BSS in the prior art;
FIG. 2 is a sketch map of IBSS in the prior art;
FIG. 3 is flow chart of the authentication negotiations between STAs in the IBSS mode in the prior art;
FIG. 4 is a flow chart of the process for notifying the multicast keys between STAs in the IBSS mode according to the present invention.

### Preferred Embodiments of the Present Invention

The present invention optimizes the flow of establishing the security association in the ad-hoc network mode in the prior art so as to make the authentication negotiation processes between every two STAs reduced from twice to once, which reduces the total times of authentication negotiation to half of that in the prior art, and at the same time, the present invention also optimizes the multicast key notification process, which reduces the multicast key notification time.

This example optimizes the flow of establishing the security association in the ad-hoc network mode in the prior art. The STA which joins into the ad-hoc network in advance is taken as the ASUE, and the STA which joins into the ad-hoc network in the end is chosen to serve as the AE to initiate the authentication activation process, so that the twice authentication negotiation processes are reduced to once. At the same time, the multicast session key of the terminal which serves as the ASUE is notified in the multicast key response packet, which optimizes the multicast key notification process and reduces the multicast key notification time, as shown in FIG. 4. The particular implementation process is as follows:
Step 401: STA1 is initiated, and the STA1 neglects the beacon of the AP, and detects whether there is a beacon of STA in the IBSS mode, and if no beacon of STA is detected, the STA1 is taken as the first STA in this network, and begins to send a beacon.
Step 402: STA2 is initiated, and the STA2 detects that the beacon of the STA1 is synchronous with the STA2.
Step 403: STA2 judges whether the ad-hoc network is in the pre-shared key mode or the certificate mode, and if in the certificate mode, STA2 serves as an AE to send an authentication activation packet to STA1 to initiate the certificate authentication process, and after the certificate authentication process ends successfully, STA2 and STA1 carry out the unicast key negotiation process. If the ad-hoc network is in the pre-shared key mode, STA2 sends a unicast key request packet to STA1, and carries out the unicast negotiation process with STA1 directly. In the unicast negotiation process, STA1 and STA2 respectively derive their respective key data such as the unicast encryption key (UEK), and the unicast integrity check key (UCK) and so on, and data such as the message authentication key (MAK), and the key encryption key and so on.
   In this step, the certificate authentication process and unicast key negotiation process are the same with the certificate authentication process and unicast key negotiation process between a STA and the AP in the BSS network.
Step 404: STA2 serves as the AE to generate sixteen octet random numbers as the notification main key (NMK), constructs a multicast key notification packet and send the multicast key notification packet to STAlto begin the multicast key notification process. The format of the multicast key notification packet includes the following content: a FLAG, a multicast session key index (MSKID), a unicast session key index (USKID), an address index (ADDID), a data sequence number, a key notification flag, key data, and a message authentication code; the content field of the key data is the ciphertext obtained by encrypting the NMK using the key encryption key by STA2 by applying unicast cryptographic algorithm chosen through negotiation.
Step 405: a) after receiving the multicast key notification packet from the STA2, STA1 detects whether the message authentication code is right or not, and if not right, STA1 discards this packet, if right, STA1 judges whether the key notification flag field value is monotone increasing, and if the key notification flag field value is monotone increasing, STA1 carries out step b), or else STA1 discards this packet.

The method for detecting whether the message authentication code is right or not is STA1 calculates a verification value using the message authentication key identified by the USKID field, and compares the verification value with the message authentication code field value. If they are the same, the message authentication code is right, or else it is not right.
b) STA1 decrypts the key data in the multicast key notification packet to obtain sixteen octet NMK, and calculates the multicast session key (including the encryption key and the integrity check key) of STA2 according to this NMK.
c) after completing above operations, STA1 calculates its own notification main key (NMK), constructs the multicast key response packet and send the packet to STA2. The data field format of the multicast key response packet is similar to the multicast key notification packet, namely including the following content: a FLAG, a multicast session key index (MSKID), a unicast session key index (USKID), an address index (ADDID), a data sequence number, a key notification flag, key data, and a message authentication code; the content field of the key data is the ciphertext obtained by encrypting the NMK using the key encryption key by STA1 by applying unicast cryptographic algorithm chosen through negotiation. Where the ADDID is the same with the ADDID in the multicast key notification packet.

Wherein the fields of the MSKID, USKID, and key notification flag not only include MSKID, USKID, and key notification flag of STA1, but also include the MSKID, USKID, and key notification flag of STA2.

At the meantime, STA1 adopts the primitive to install the multicast session key of STA2, and invokes the primitive to start the receiving function based on the multicast session key notified by the STA2.

Step 406: a) after receiving the multicast key response packet, STA2 detects whether the message authentication code is right or not, and if not right, the STA2 discards this packet, if right, the STA2 judges whether the key notification flag field value is monotone increasing, and if the key notification flag field value is monotone increasing, the STA2 carries out step b), or else discards this packet.

The method for detecting whether the message authentication code is right or not is STA2 calculates a verification value using the message authentication key identified by the USKID field of the STA1, and compares the verification value with the message authentication code field value. If they are the same, the message authentication code is right, or else it is not right.
b) STA2 compares the MSKID field of STA2, the USKID field of STA2, the ADDID field and key notification flag field of STA2 in the multicast key response packet with the values of corresponding fields in the multicast key notification packet sent by the STA2, and if all of them are the same, the multicast key notification of the STA2 succeeds, if parts or all of them are different, STA2 discardsthis multicast key response packet.
c) after the multicast key notification of STA2 succeeds, STA2 adopts the primitive to start the sending function of the multicast session key notified by itself,
d) STA2 decrypts the key data in the multicast key response packet to obtain sixteen octet NMK, calculates the multicast session key (including the encryption key and the integrity check key) of STA1 according to this NMK, adopts primitive to install the multicast session key of the STA1, and invokes the primitive to start the receiving function based on the multicast session key notified by the STA1.
e) STA2 constructs the multicast key confirmation packet and sends the packet to STA1, and opens a controlled port. This multicast key confirmation packet includes the FLAG, MSKID, USKID, ADDID, key notification flag, and message authentication code; wherein the ADDID field is the same with the ADDID field in the multicast key notification packet and the multicast key response packet; the MSKID, USKID, and key notification flag fields are the MSKID, USKID, key notification flag fields of STA1, and the message authentication code is calculated newly.

Step 407: a) after receiving the multicast key confirmation packet, STA1 detects whether the message authentication code is right or not, and if not right, STA1 discards this packet, or else carries out step b).

The method for detecting whether the message authentication code is right or not is STA1 calculates a verification value using the message authentication key identified by the USKID field, and compares the verification value with the message authentication code field value. If they are the same, the message authentication code is right, or else it is not right.
b) STA1 compares the MSKID field, the USKID field, and key notification flag field of STA1 in the multicast key confirmation packet with the values of corresponding fields of STA1 in the multicast key response packet, and compares the ADDID field with the ADDID field in the multicast key response packet, and if all of them are the same, the multicast key notification of the STA1 succeeds, if parts or all of them are different, STA1 discards this packet.
c) after the multicast key notification of the STA1 succeeds, STA1 adopts primitive to start the sending function of multicast session key notified by itself, and opens a controlled port.

Afterwards, if other STA joins into the ad-hoc network, it carries out the process of steps 402 to 407 with STA1 and STA2 to implement establishment of security association.

### Industrial Applicability

The present invention provides a method for establishing the security association among WAPI stations in the ad-hoc network, which reduces the twice authentication negotiation process between two STAs to once, and reduces the total times of authentication negotiation to half of that in the prior art. And at the same time, the multicast key notification process is optimized, which reduces the multicast key notification time.

## Claims

1. A method for establishing a security association among WAPI stations in an ad-hoc network, and the method comprising:
when a security association between two stations in the ad-hoc network is to be established, one station STA1 serving as an authentication supplicant entity, another station STA2 serving as an authenticator entity, the station STA2 which serves as the authenticator entity initiating an authentication negotiation to the station STA1 which serves as the authentication supplicant entity, and after completing a unicast key negotiation, the station STA1 and the station STA2 carrying out a multicast key negotiation, and establishment of the security association being finished after multicast session keys of the station STA1 and the station STA2 are notified successfully in said multicast key negotiation process.

2. The method as claimed in claim 1, wherein
said station STA1 is a station which joins into the ad-hoc network in advance, and said station STA2 is a station which joins into the ad-hoc network later.

3. The method as claimed in claim 1, wherein
said multicast key negotiation process comprises steps of:
said station STA2 sending a multicast key notification packet to said station STA1 to start the multicast key negotiation process;
said station STA1 verifying said multicast key notification packet, and after the verification succeeds, said station STA1 returning a multicast key response packet to said station STA2;
said station STA2 verifying said multicast key response packet to implement a multicast key notification of said station STA2, and judging whether said multicast key notification of said station STA2 succeeds or not, and after said multicast key notification of said station STA2 is judged to be successful, said station STA2 returning a multicast key confirmation packet to said station STA1; and
said station STA1 verifying said multicast key confirmation packet to implement a multicast key notification of said station STA1, and judging whether said multicast key notification of said station STA1 succeeds or not, and after said multicast key notification of said station STA1 is judged to be successful, the multicast key negotiation process of said station STA1 and said station STA2 being finished.

4. The method as claimed in claim 3, wherein
said multicast key notification packet includes a flag, a multicast session key index, a unicast session key index, an address index, a data sequence number, a key notification flag, key data and a message authentication code;
said step of said station STA1 verifying said multicast key notification packet comprises:
said station STA1 detecting whether said message authentication code is right or not and whether said key notification flag is monotone increasing or not, and if said message authentication code is right and said key notification flag is monotone increasing, the verification being successful, if said message authentication code is not right, or said message authentication code is right while key notification flag is not monotone increasing, the verification being failed, and said station STA 1 discarding said multicast key notification packet.

5. The method as claimed in claim 4, after said step of said station STA1 verifying said multicast key notification packet, said method further comprising:
said station STA1 calculating a multicast session key of said station STA2 according to a notification main key in said key data, installing the multicast session key of said station STA2 adopting a primitive, and invoking the primitive to start a receiving function of the multicast session key of said station STA2.

6. The method as claimed in claim 3, wherein
said multicast key response packet includes a flag, a multicast session key index, a unicast session key index, an address index, a data sequence number, a key notification flag, key data and a message authentication code; and said address index is the same with an address index in the multicast key notification packet; and
said multicast session key index not only includes a multicast session key index of said station STA1, but also includes a multicast session key index of said station STA2, and said unicast session key index not only includes a unicast session key index of said station STA1, but also includes a unicast session key index of said station STA2, and said key notification flag not only include a key notification flag of the station STA2, but also includes a key notification flag of the station STA1.

7. The method as claimed in claim 6, wherein
said step of said station STA2 verifying said multicast key response packet comprises:
said station STA2 detecting whether said message authentication code is right or not, comparing the multicast session key index, unicast session key index, address index and key notification flag of the station STA2 in said multicast key response packet are the same with corresponding field values in said multicast key notification packet, and if said message authentication code is right, and all of said corresponding field values are the same, the multicast key notification of said station STA2 being successful;
if said message authentication code is wrong, or parts or all of said corresponding field values are different, the multicast key notification of said station STA2 being failed, and the STA2 discarding said multicast key response packet.

8. The method as claimed in claim 7, after said step of said multicast key notification of said station STA2 being judged to be successful, said method further comprising:
said station STA2 starting a sending function of the multicast session key of said station STA2 using a primitive, and
said station STA2 calculating a multicast session key of said station STA1 according to a notification main key in said key data in said multicast key response packet, installing the multicast session key of said station STA1 adopting a primitive, and invoking the primitive to start a receiving function of the multicast session key of said station STA1.

9. The method as claimed in claim 3, wherein
said multicast key confirmation packet includes a flag, a multicast session key index, a unicast session key index, an address index, a key notification flag and a message authentication code; and said address index field is the same with address indices in the multicast key notification packet and the multicast key response packet; and
said multicast session key index is a multicast session key index of said station STA1, said unicast session key index is a unicast session key index of said station STA1, and said key notification flag is a key notification flag of the station STA1.

10. The method as claimed in claim 9, wherein said step of said station STA1 verifying said multicast key confirmation packet comprises:
said station STA1 detecting whether said message authentication code is right or not, comparing the multicast session key index, unicast session key index and key notification flag in said multicast key confirmation packet are the same with corresponding multicast session key index, unicast session key index and key notification flag of said stations STA1 in said multicast key response packet, and comparing the address index in said multicast key confirmation packet is the same with the address index in said multicast key response packet, and if said message authentication code is right and a result of the comparison is all are the same, the multicast key notification of said station STA1 being successful; if said message authentication code is wrong, or the result of comparison is parts or all are different, the multicast key notification of said station STA1 being failed, and said STA1 discarding said multicast key confirmation packet.

11. The method as claimed in claim 10, after said step of said multicast key notification of said station STA1 being successful, said method further comprising:
said station STA1 starting a sending function of the multicast session key of said station STA1 using a primitive.

12. The method as claimed in claim 1, further comprising:
before said step of said station STA2 initiating the authentication negotiation to said station STA1, said station STA2 judging whether said ad-hoc network is in a pre-shared key mode or a certificate mode, and if in the certificate mode, said station STA2 sending an authentication activation packet to said station STA1 to initiate a certificate authentication process, and after the certificate authentication process initiated by said authentication activation packet ends successfully, said station STA2 and station STA1 carrying out said unicast key negotiation; if in the pre-shared key mode, said station STA2 sending a unicast key request packet to said station STA1, and said station STA2 and station STA1 directly carrying out said unicast key negotiation.
